(19) Europäisches Patentamt
European Patent Office
Office européen des brevets

(11) EP 1 506 985 A1

(12) EUROPEAN PATENT APPLICATION

(43) Date of publication:
16.02.2005 Bulletin 2005/07

(51) Int Cl.[7]: **C09J 183/00**, C08K 5/19

(21) Application number: **04018967.2**

(22) Date of filing: **10.08.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **13.08.2003 JP 2003292978**

(71) Applicant: **ASAHI GLASS COMPANY LTD.**
**Tokyo 100-8405 (JP)**

(72) Inventors:
- **Miyako, Takeomi**
  **Ichihara-shi Chiba (JP)**
- **Moriwaki, Ken**
  **Ichihara-shi Chiba (JP)**

(74) Representative: **Müller-Boré & Partner**
**Patentanwälte**
**Grafinger Strasse 2**
**81671 München (DE)**

# (54) Near infrared absorptive adhesive composition and optical film

(57) A near infrared absorptive adhesive composition comprising a near infrared absorptive dye having the maximum absorption wavelength within a range of from 800 to 1100 nm, and a silicone adhesive.

EP 1 506 985 A1

## Description

The present invention relates to a near infrared absorptive adhesive composition having a near infrared absorptivity to absorb near infrared rays, and an optical film employing such a composition, particularly an optical film suitable for use as an optical filter to be used as installed on the viewer's side of a plasma display panel (hereinafter referred to as PDP).

The principle of PDP is to apply a voltage to a rare gas (such as helium, neon, argon or xenon) sealed between a pair of sheet glass and to impinge ultraviolet rays thereby formed to an illuminant so that visible lights will be emitted.

From PDP, not only visible lights, but also harmful lights such as near infrared rays or electromagnetic waves will be radiated. For example, near infrared rays are likely to lead to malfunction of near infrared remote control devices for home electric appliances such as home TV, air conditioners or video decks, or malfunction of communication equipments thereby to present adverse effects to data transmission such as POS (point of sale) systems. Accordingly, an optical filter is provided on the front surface (the viewer's side) of PDP to prevent harmful lights such as near infrared rays, whereby the transmittance of near infrared rays of from 850 to 1,100 nm is reduced, for example, to a level of at most 20%.

Heretofore, it has been proposed to use (as such an optical filter, an optical filter to shield near infrared rays having wavelengths of from 850 to 1,100 nm.

As such an optical film, there is, for example, one prepared by dispersing a near infrared absorptive dye in a transparent resin and applying it on a film of e.g. polyethylene terephthalate (PET).

As the near infrared absorptive dye, various dyes have been reported including e.g. a diimonium type, a polymethyne type, a metal complex type, a squarylium type, a cyanine type and an indoaniline type.

These dyes are usually used in combination of two or more of them in order to provide a high level of near infrared absorptivity to absorb near infrared rays having a wide range of wavelengths.

However, the above-mentioned optical film is bonded to a transparent substrate such as a glass sheet via an adhesive layer, to prepare an optical filter, whereby process steps increase, and the production efficiency is poor. Further, it is difficult to make the obtainable optical filter to be thin.

Whereas, a method of imparting near infrared absorptivity to an adhesive layer has been proposed. For example, JP-A-2001-207142 discloses an infrared absorption sheet having an infrared absorptive dye incorporated to an acrylic adhesive.

However, as a result of a study by the present inventors, it has been found that a near infrared absorptive dye such as a diimonium dye has a problem that in an acrylic adhesive, it is poor in heat resistance and is likely to be deteriorated. Such deterioration of the near infrared absorptive dye deteriorates the optical characteristics of the optical film.

The present invention has been made in view of such problems of the prior art. Namely, it is an object of the present invention to provide a near infrared absorptive adhesive composition which is excellent in heat resistance and whereby an optical filter can be prepared in a simple construction, and to provide such an optical film.

As a result of an extensive study, the present inventors have found that by incorporating a near infrared absorptive dye in a silicone adhesive, the heat resistance of the near infrared absorptive dye can be improved. Further, as a result of a further study, the present inventors have found that when a diimonium dye is used as the near infrared absorptive dye, even with a single type of such a diimonium dye, a wide range of near infrared rays can be absorbed.

The present invention has been made on the basis of such discoveries, and the present invention provides a near infrared absorptive adhesive composition comprising a near infrared absorptive dye having the maximum absorption wavelength within a range of from 800 to 1100 nm, and a silicone adhesive.

The above near infrared absorptive dye preferably contains a diimonium dye of the following formula (I):

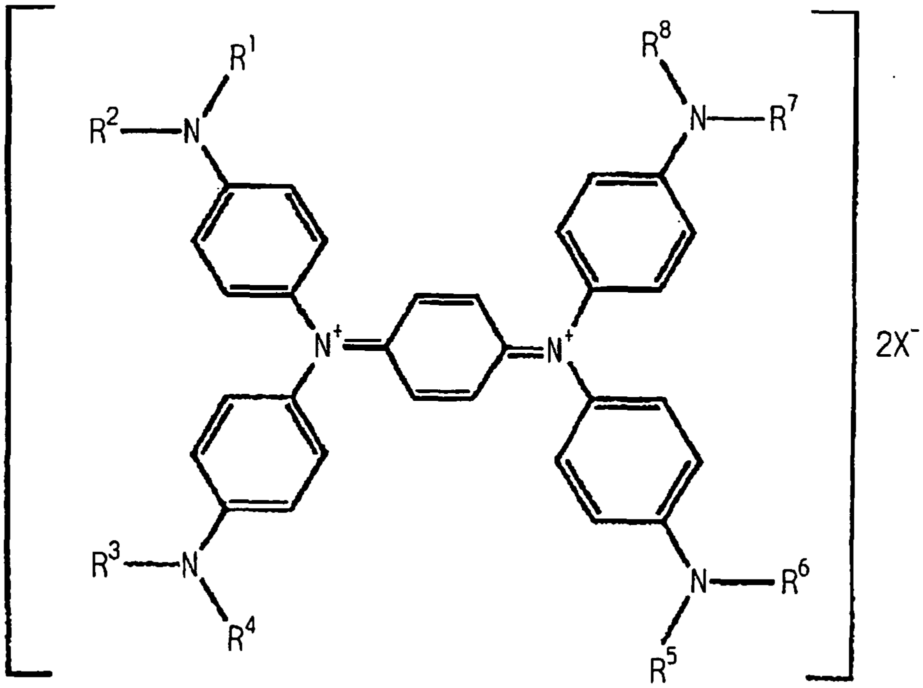

(I)

wherein each of $R^1$ to $R^8$ which are independent of one another, is a hydrogen atom, an alkyl group which may be substituted, an alkenyl group which may be substituted, an aralkyl group which may be substituted, or an alkynyl group which may be substituted, and $X^-$ is an anion.

Further, in the above formula (I), each of $R^1$ to $R^8$ is preferably a $C_{4-8}$ alkyl group.

Further, the present invention provides an optical film having a near infrared absorption layer comprising the above near infrared absorptive adhesive composition.

By the near infrared absorptive adhesive composition of the present invention, an optical film which is excellent in heat resistance and has good optical characteristics and whereby an optical filter can be prepared in a simple construction, can be provided.

Now, the present invention will be described in detail.

Near infrared absorptive adhesive composition

The near infrared absorptive adhesive composition of the present invention comprises a near infrared absorptive dye and a silicone adhesive.

Silicone adhesive

In the present invention, the silicone adhesive to be used in combination with the above near infrared absorptive dye, is not particularly limited, and known silicone adhesives may be used.

Silicone adhesives may generally be classified into two types i.e. a radical reaction type and an addition reaction type. In the present invention, an addition reaction type silicone adhesive is preferably employed, since deterioration of the near infrared absorptive dye can thereby particularly remarkably be suppressed.

The radical reaction type is one which employs, as a curing catalyst, an organic peroxide such as benzoyl peroxide. Curing takes place in two steps, for example, by a preliminary heating at 80°C plus heating at 150°C for 5 minutes by a curing reaction as represented by the following reaction formula (A):

$$\equiv SiCH_2\cdot + SiCH_2\cdot \rightarrow\rightarrow\rightarrow\rightarrow \equiv SiCH_2CH_2Si\equiv \qquad (A)$$

With the radical reaction type silicone adhesive, the adhesive properties can be adjusted by the amount of

the organic peroxide to be added.

As such a radical reaction type adhesive, those disclosed in e.g. "Silicone Material Handbook" (published by Toray Dow Corning Co., Ltd.) may, for example, be used. Further, commercial products are available such as SH4280, SE4200, SD4284 and Q2-7735, tradenames, manufactured by Toray Dow Corning Co., Ltd., and YR3286 and YR3340, tradenames, manufactured by GE Toshiba Silicones.

The addition reaction type is one obtained by a hydrosilylation reaction between an alkenyl group-containing organopolysiloxane containing at least two alkenyl groups (preferably vinyl groups) in one molecule and an organohydrogen polysiloxane containing at least two SiH groups in one molecule. An addition reaction catalyst such as platinum or a platinum compound is used. Curing takes place in a single step, for example, by a curing reaction represented by the following reaction formula (B):

$$\equiv SiCH{=}CH_2 + \equiv SiH \rightarrow\rightarrow\rightarrow\rightarrow \equiv SiCH_2CH_2Si\equiv \quad (B)$$

With the addition reaction type silicone adhesive, the adhesive properties can be adjusted by adjusting the types and the amounts of the alkenyl group-containing organopolysiloxane and the organohydrogen polysiloxane to be used.

The addition reaction type silicone adhesive cures under reaction conditions of a low temperature and a short time (e.g. at 100°C for three minutes) as compared with the radical reaction type. Accordingly, in a case where an infrared absorption layer is to be formed on a substrate by means of the composition in the after-mentioned preparation of an optical film, a material having low heat resistance, may be used as the substrate. Further, it has such merits that no by-products will be formed by the curing, and the heat resistance is excellent. Further, since no radicals will be formed as in the case of a radical reaction type, there will be no deterioration of the near infrared absorptive dye by radicals.

As such an addition reaction type silicone adhesive, those disclosed in e.g. JP-C-2734809, JP-A-10-195414 and JP-A-2001-158876, may, for example, be used. Further, commercial products are available such as SD4560, SD4570, SD4580 and SD4590, tradenames, manufactured by Toray Dow Corning Co., Ltd. and XR37-B4399 and XR37-B5389, manufactured by GE Toshiba Silicones.

In the present invention, the reason as to why the heat resistance of the near infrared absorptive dye is improved by incorporating it in a silicone adhesive, is not necessarily clearly understood. In the case of an acrylic adhesive, the polymer constituting the adhesive has many crosslinking reactive groups (such as isocyanate groups, hydroxyl groups, glycidyl groups or carboxyl groups) and will cure when such crosslinking reactive groups will react with e.g. a crosslinking agent. Such a curing reaction is slow, and crosslinking reactive groups may sometimes remain even after a near infrared absorption layer is formed. It is considered that accordingly, the near infrared absorptive dye in the near infrared absorption layer will be deteriorated, whereby the durability, particularly the heat resistance, of the obtainable optical film, will be deteriorated. Whereas, with the silicone adhesive, the curing reaction will be finished in a few minutes, whereby it is considered that deterioration of the near infrared absorptive dye will be suppressed, and the heat resistance of the optical film thereby obtained, will be improved.

Near infrared absorptive dye

In the present invention, the near infrared absorptive dye is not particularly limited, so long as it has the maximum absorption wavelength within a range of from 800 to 1,100 nm, and a near infrared absorptive dye which is commonly used for an optical filter having an infrared absorptivity, may be used.

Here, "has the maximum absorption wavelength within a range of from 800 to 1,100 nm" means that when the absorption spectrum of the dye is measured, it has at least one absorption peak within a wavelength range of from 800 to 1,100 nm.

The infrared absorptive dye to be used in the present invention preferably has a molar absorptivity ($\varepsilon_m$) of at least $1.1\times10^3$, more preferably at least $2.0\times10^4$, particularly preferably at least $5.0\times10^4$, at the wavelength showing an absorption peak (the maximum absorption wavelength ($\lambda_{max}$)), when the absorption spectrum of the dye is measured by the following measuring method. Thus, the near infrared absorption layer formed by means of the near infrared absorptive adhesive composition, can be made thin.

Method for measuring the molar absorptivity ($\varepsilon_m$)

The dye is diluted with chloroform so that the sample concentration becomes 20 mg/L to obtain a sample solution. The absorption spectrum of this sample solution is measured within a range of from 300 to 1,300 nm by means

of a spectrophotometer, and its maximum absorption wavelength ($\lambda_{max}$) is read out, whereupon the molar absorptivity ($\varepsilon_m$) at the maximum absorption wavelength ($\lambda_{max}$) is calculated by the following formula.

$$\varepsilon = -\log (I/I_0)$$

($\varepsilon$: absorptivity, $I_0$: light intensity before incidence, I: light intensity after incidence)

$$\varepsilon_m = \varepsilon/(c \cdot d)$$

($\varepsilon_m$: absorptivity, c: concentration of the sample (mol/L), d: cell length)

As such a near infrared absorptive dye, a common dye such as an inorganic pigment, an organic pigment or an organic dye may, for example, be used.

As the inorganic pigment, a cobalt colorant, an iron colorant, a chromium colorant, a titanium colorant, a vanadium colorant, a zirconium colorant, a molybdenum colorant, a ruthenium colorant, a platinum colorant, an ITO colorant or an ATO colorant may, for example, be mentioned.

As the organic pigment or the organic dye, a diimonium dye, an anthraquinone dye, an aminium dye, a cyanine dye, a merocyanine dye, a croconium dye, a squarylium dye, an azulenium dye, a polymethyne dye, a naphthoquinone dye, a pyrilium dye, a phthalocyanine dye, a naphthalocyanine dye, a naphthalolactam dye, an azo dye, a condensed azo dye, an indigo dye, a perinone dye, a perylene dye, a dioxadine dye, a quinacridone dye, an isoindolynone dye, a quinophthalone dye, a pyrrol dye, a thioindigo dye, a metal complex dye, a dithiol metal complex dye, an indol phenol dye or a triallylmethane dye, may, for example, be mentioned.

In the present invention, a diimonium dye is preferably employed among the above-mentioned infrared absorptive dyes, since the color of the optical film thereby obtainable is good.

The diimonium dye is a compound represented by the above formula (I).

In the formula (I), the alkyl group for each of $R^1$ to $R^8$ may be linear or branched, and has preferably from 1 to 12 carbon atoms, more preferably from 4 to 8 carbon atoms, particularly preferably from 4 to 6 carbon atoms. When the carbon number is at least 4, the solubility in an organic solvent will be good, and when the carbon number is at most 8, the heat resistance will be good. Such an alkyl group may, for example, be a methyl group, an ethyl group, an n-propyl group, an iso-propyl group, a n-butyl group, a sec-butyl group, an iso-butyl group, a tert-butyl group, a n-pentyl group, a tert-pentyl group, a n-hexyl group, a n-octyl group or a tert-octyl group. The alkyl group may have a substituent such as an alkoxycarbonyl group, a hydroxyl group, a sulfo group or a carboxyl group.

The alkenyl group may, for example, be a vinyl group, a propenyl group, a butenyl group, a pentenyl group, a hexenyl group, a heptenyl group or an octenyl group. Such an alkenyl group may have a substituent such as a hydroxyl group or a carboxyl group.

The aralkyl group may, for example, be a benzyl group, a p-chlorobenzyl group, a p-methylbenzyl group, a 2-phenylethyl group, a 2-phenylpropyl group, a 3-phenylpropyl group, a naphthylmethyl group or a 2-naphthylethyl group. Such an aralkyl group may have a substituent such as a hydroxyl group or a carboxyl group on the aromatic ring.

The alkynyl group may, for example, be a propynyl group, a butynyl group, a 2-chlorobutynyl group, a pentynyl group or a hexynyl group. Such an alkynyl group may have a substituent such as a hydroxyl group or a carboxyl group.

$X^-$ is an anion such as a chlorine ion, a bromine ion, an iodine ion, a perchlorate ion, a periodate ion, a nitrate ion, a benzene sulfonate ion, a p-toluene sulfonate ion, a methylsulfate ion, an ethylsulfate ion, a propylsulfate ion, a tetrafluoroborate ion, a tetramethylborate ion, a hexafluorophosphate ion, a benzene sulfinate ion, an acetate ion, a trifluoroacetate ion, a propionate ion, a benzoate ion, an oxalate ion, a succinate ion, a malonate ion, an oleate ion, a stearate ion, a citrate ion, monohydrogen diphosphate ion, a dihydrogen monophosphate ion, a pentachlorotitanate ion, a chlorosulfonate ion, a fluorosulfonate ion, a trifluoromethane sulfonate ion, a hexafluoro arsenate ion, a hexafluoro antimonate ion, a molybdate ion, a tungstate ion, a titanate ion, a zirconate ion, a bis(trifluoromethane sulfonyl) imidate ion or a naphthyl sulfonate ion.

Among these anions, a perchlorate ion, an iodine ion, a tetrafluoroborate ion, a hexafluorophosphate ion, a hexafluoroantimonate ion, a trifluoromethanesulfonate ion or a bis(trifluoromethane sulfonyl) imidate ion is, for example, preferred, and particularly preferred is a hexafluoroantimonate ion or a bis(trifluoromethane sulfonyl) imidate ion, since it is excellent in thermal stability.

In the present invention, the diimonium dye is particularly preferably such that the molar absorptivity $\varepsilon_m$ in the vicinity of 1,000 nm is from about $0.8\times10^4$ to $1.0\times10^6$ as measured by the above measuring method.

Further, in order to suppress deterioration during processing into an optical film and to impart practical durability after formed into an optical film, it is preferred to use a diimonium dye having a purity of at least 98%, or a diimonium dye having a melting point of at least 210°C. It is particularly preferred to use a diimonium dye having a purity of at

least 98% and a melting point of at least 210°C.

Further, by a study made by the present inventors, it has been found that when a diimonium dye is incorporated in a silicone adhesive, the absorption of the diimonium dye tends to shift to a short wavelength side, as the number of carbon atoms in the side chain of the diimonium dye (the group corresponding to each of $R^1$ to $R^8$ in the above formula (I)) increases, whereby there is an effect such that only with one type of the diimonium dye, a wide range of near infrared rays can be absorbed. Accordingly, there will be merits such as reduction of costs, shortening of the process and prevention of deterioration of the dye due to mutual actions among different types of dyes.

Such a shift in absorption is not observed in a case when the diimonium dye is used in an acrylic resin, and it always shows the maximum absorption wavelength in the vicinity of 1,000 nm, i.e. in the vicinity of the upper limit in the near infrared range. Accordingly, it will be required to further incorporate a near infrared absorptive dye capable of absorbing near infrared rays in the vicinity of 850 nm, other than the diimonium dye. However, by using the silicone adhesive, the maximum absorption wavelength will be shifted towards a shorter wavelength side, whereby near infrared rays within a wide range can be absorbed only by the diimonium dye.

In the near infrared absorptive adhesive composition of the present invention, the amount of the near infrared absorptive dye to be incorporated, is preferably from 0.1 to 20 parts by mass, more preferably from 0.5 to 10 parts by mass, per 100 parts by mass of the silicone adhesive. When the amount of the near infrared absorptive dye is at least 0.1 part by mass, sufficient near infrared absorptivity can be obtained. And when it is at most 20 parts by mass, such a risk that the near infrared absorptive dye presents an adverse effect to the durability of the adhesive strength, is little. Such an amount may suitably be determined taking into consideration the near infrared absorptivity which is desired for the optical film to be obtained, the absorptivity of the infrared absorbing agent to be used, etc.

In the present invention, it is particularly preferred that the near infrared absorptive dye contains a diimonium dye, as mentioned above. The proportion of the diimonium dye in the entire near infrared absorptive dye is preferably from 50 to 100 mass%, more preferably from 80 to 100 mass%. It is particularly preferred that the entirety of the near infrared absorptive dye is a diimonium dye.

The near infrared absorptive adhesive composition of the present invention can be produced by incorporating the near infrared absorptive dye and other optional components which will be described hereinafter, to the silicone adhesive. Any known blending method may be employed. It is preferred to employ a method wherein the silicone adhesive, the near infrared absorptive dye and other optional components are dissolved or dispersed in a solvent which is capable of dissolving or dispersing them, such as an organic solvent which will be described hereinafter, whereby a uniform composition can be obtained. Particularly preferred is a method wherein the silicone adhesive, the near infrared absorptive dye and other optional components are dissolved in a solvent which is capable of dissolving them, and then the solvent is distilled off.

Other optional components

To the near infrared absorptive adhesive composition of the present invention, a color-adjusting dye having the maximum absorption wavelength within a range of from 300 to 800 nm, a leveling agent, an antistatic agent, a heat stabilizer, an antioxidant, a dispersant, a flame retardant, a lubricant, a plasticizer or an ultraviolet absorber may, for example, be incorporated within a range not to impair the effect of the present invention.

Optical film

The optical film of the present invention has a near infrared absorption layer comprising the near infrared absorptive adhesive composition.

More specifically, it may, for example, be one having the near infrared absorption layer formed on the releasable substrate to be peeled off at the time of use, or one having the near infrared absorption layer formed on a transparent substrate having a visible light transmittance (hereinafter referred to also as a support film), so that the layer is integrated with the support film.

Usually, such an optical film is disposed on the viewer's side of a display device such as PDP and accordingly, preferably has an achromatic color. Accordingly, since the chromaticity coordinates corresponding to the achromatic color are (x, y) = (0.310, 0.316) based on illuminant C as calculated in accordance with JIS Z8701-1999, the optical film of the present invention is preferably adjusted to have (x, y) = (0.310±0.100, 0.316±0.100) by suitably selecting the type and content of the dye.

Further, it is preferred that the luminous average transmittance is adjusted to be at least 45%.

It is particularly preferred that the above prescription for the chromaticity coordinates (x, y) and the prescription for the luminous average transmittance are satisfied at the same time.

The near infrared absorption layer in the present invention may, for example, be formed by coating a liquid (hereinafter referred to as a coating liquid) having the near infrared absorptive dye, the silicone adhesive and the above-mentioned other optional components in the present invention dissolved or dispersed in an organic solvent, on a releasable substrate or support film, followed by drying.

The above organic solvent may, for example, be an aromatic type such as toluene or xylene, an amide type such as N-methyl-2-pyrrolidone, dimethylformamide or dimethylacetamide, a ketone type such as methyl ethyl ketone, methyl isobutyl ketone or acetone, an alcohol type such as methanol, ethanol or i-propyl alcohol, a hydrocarbon type such as hexane, or tetrahydrofuran. These organic solvents may be used alone or as suitably mixed, as the case requires.

Coating of the coating liquid may be carried out by means of a coating method such as a dip coating method, a spray coating method, a spinner coating method, a bead coating method, a wire bar coating method, a blade coating method, a roller coating method, a curtain coating method, a slit die coater method, a gravure coater method, a slit reverse coater method, a microgravure method or a comma coater method.

The thickness of the near infrared absorption layer of the present invention is preferably adjusted to be within a range of from 0.3 to 50.0 μm. When it is at least 0.3 μm, the near infrared absorptivity will be sufficiently obtained, and when it is at most 50 μm, retention of an organic solvent at the time of molding can be reduced. From such viewpoints, the thickness is particularly preferably adjusted to be within a range of from 0.5 to 30.0 μm.

The releasable substrate may be in a film form or in a plate form, and the material, thickness, etc. are not particularly limited. To improve the releasability, releasing treatment may be applied to the substrate surface by using e.g. a silicone or a resin having a low surface tension. The material for the support film may suitably be selected for use from such materials as a polyester such as polyethylene terephthalate (PET) or polybutylene terephthalate (PBT), a polyolefin such as polyethylene or polypropylene, a polyacrylate, a polymethacrylate such as polymethyl methacrylate (PMMA), a polycarbonate (PC), a polystyrene, triacetate, polyvinyl alcohol, polymethyl chloride, polyvinylidene chloride, an ethylene/vinyl acetate copolymer, polyvinyl butyral, a polyurethane and cellophane, and preferred is PET, PC or PMMA.

The thickness of the support film is preferably within a range of from 10 to 500 μm, whereby the working efficiency is good, and the haze value can be suppressed to a low level. Further, it is preferred that corona treatment or bonding facilitating treatment is applied to the support film surface before forming the near infrared absorption layer or an optional functional layer which will be described hereinafter on the support film.

After forming the near infrared absorption layer in the present invention on a releasable substrate or support film, it is preferred from the viewpoint of the working efficiency to further bond a release film on the near infrared absorption layer. As such a release film, the same one as the above-mentioned releasable substrate may be employed.

The optical film of the present invention may have at least one optional functional layer other than the near infrared absorption layer. Such a functional layer may, for example, be a ultraviolet absorption layer to prevent deterioration of the dye due to ultraviolet rays thereby to improve the light resistance, an antireflection layer to improve the viewing property of an image, an electromagnetic wave-shielding layer to shield electromagnetic waves emitted from a display device such as PDP, a hard coating layer to provide a scratch-resistance function or a layer having a self healing property, or an anti-fouling layer to prevent fouling of the outermost surface, or a sticky or adhesive layer to laminate the respective layers.

Such a functional layer may, for example, be provided preliminarily on the releasable substrate prior to forming the near infrared absorption layer on the releasable substrate, or may be provided on the near infrared absorption layer after forming the near infrared absorption layer on the releasable substrate, or may be provided on the near infrared absorption layer exposed by peeling the releasable substrate formed on the near infrared absorption layer. Otherwise, it may be preliminarily formed on the support film before forming the near infrared absorption layer on the support film. Further, the support film itself may be provided with a function as the functional layer.

The optical film of the present invention may be used, for example, by bonding the near infrared absorption layer exposed by peeling the release film, to a transparent substrate having a high rigidity (hereinafter referred to as a transparent substrate). The material for the transparent substrate may be suitably selected for use from glass and transparent and highly rigid polymer materials. Preferred as the material for the transparent substrate is glass, reinforced or semi-reinforced glass, polycarbonate or polyacrylate.

When one having the optical film bonded on a transparent substrate, is used as an optical filter, it can provide a function as a protective plate for a display device such as PDP.

The optical film of the present invention, or the one having the optical film bonded on a transparent substrate, can be used as an optical filter for a display device such as a flat surface display device such as PDP, a plasma address liquid crystal (PALC) display panel or a field emission display (FED) panel, or a cathode ray tube display device (CRT).

In such a case, the optical film may be provided on the viewer's side of a display device, and it may be disposed with a distance from the display device or may be directly bonded on the surface of the display device.

The optical film of the present invention is excellent in heat resistance and has good optical characteristics, and yet the optical filter can be produced in a simple structure. Thus, it is useful particularly for an optical filter for e.g. PDP which generates near infrared rays.

Now, the present invention will be described in further detail with reference to Examples. However, it should be understood that the present invention is by no means restricted by such Examples. Examples 1 to 7 are Examples of the present invention, and Examples 8 to 12 are Comparative Examples.

EXAMPLE 1

100 Parts by weight of an addition-reaction type silicone adhesive ("SD4570", tradename, manufactured by Toray Dow Corning Silicone Co., Ltd.), 0.9 part by mass of a curing agent ("SRX212", tradename, manufactured by Toray Dow Corning Silicone Co., Ltd.) and 100 parts by mass of methyl ethyl ketone were mixed and adjusted so that the solid content would be 30 mass%, to obtain a base solution. 1.0 mass%, based on the resin content of this base solution, of a diimonium dye (N,N,N',N'-tetrakis(p-diethylaminophenyl)-p-phenylenediamine-hexafluoroantimonic acid imonium salt; "NIR-IM2C2" tradename, manufactured by Nagase Chemitex K.K., $\lambda_{max}$: 1,059 nm, $\varepsilon_m$: $8.36\times10^4$) was added to the base solution, to obtain a coating liquid having them dissolved. This coating liquid was coated on a polyethylene terephthalate film having a thickness of 100 μm ("A4100", tradename, manufactured by Toyobo Co., Ltd.) by a bar coater so that the thickness of the dried coated film would be 25 μm and dried at 120°C for 5 minutes, and then bonded to a fluorine type separator ("SS-4", tradename, manufactured by Nippa K.K.) to obtain an optical film.

EXAMPLE 2

An optical film was obtained in the same manner as in Example 1 except that instead of the diimonium dye used in Example 1, 1.0 mass% of N,N,N',N'-tetrakis(p-dibut ylaminophenyl)-p-phenylenediamine-hexafluoroantimonic acid imonium salt ("NIR-IM2C4" tradename, manufactured by Nagase Chemitex K.K., $\lambda_{max}$: 1,074 nm, $\varepsilon_m$: $9.27\times10^4$) was used.

EXAMPLE 3

An optical film was obtained in the same manner as in Example 1 except that instead of the diimonium dye used in Example 1, 1.0 mass% of N,N,N',N'-tetrakis(p-dipentylaminophenyl)-p-phenylenediamine-hexafluoroantimonic acid imonium salt ("NIR-IM2C5" tradename, manufactured by Nagase Chemitex K.K., $\lambda_{max}$: 1,079 nm, $\varepsilon_m$: $8.92\times10^4$) was used.

EXAMPLE 4

An optical film was obtained in the same manner as in Example 1 except that instead of the diimonium dye used in Example 1, 1.0 mass% of N,N,N',N'-tetrakis(p-dihexylaminophenyl)-p-phenylenediamine-hexafluoroantimonic acid imonium salt ("NIR-IM2C6" tradename, manufactured by Nagase Chemitex K.K., $\lambda_{max}$: 1,078 nm, $\varepsilon_m$: $9.00\times10^4$) was used.

EXAMPLE 5

An optical film was obtained in the same manner as in Example 1 except that instead of the diimonium dye used in Example 1, 1.0 mass% of N,N,N',N'-tetrakis(p-dioctylaminophenyl)-p-phenylenediamine-hexafluoroantimonic acid imonium salt ("NIR-IM2C8" tradename, manufactured by Nagase Chemitex K.K., $\lambda_{max}$: 1,080 nm, $\varepsilon_m$: $8.08\times10^4$) was used.

EXAMPLE 6

An optical film was obtained in the same manner as in Example 1 except that instead of the diimonium dye used in Example 1, 1.0 mass% of a diimonium dye (N,N,N',N'-tetrakis(p-dibutylaminophenyl)-p-phenylenediamine-bis (bis(trifluoromethane sulfonyl)imidic acid) imonium salt; "CIR-1085", tradename, manufactured by Japan Carlit Co., Ltd., $\lambda_{max}$: 1,079 nm, $\varepsilon_m$: $1.02\times10^5$) was used.

EXAMPLE 7

The transparent substrate used in Example 1 was replaced by an antireflection film ("Arctop URP2199", tradename, manufactured by Asahi Glass Company, Limited), and the dye-containing adhesive layer prepared in Example 1, was formed on the side opposite to the antireflection layer. Thereafter, the separator was peeled off, followed by bonding to a transparent glass of 2.5 mm to obtain an optical filter.

EXAMPLE 8

An optical filter was obtained in the same manner as in Example 1 except that the base solution used in Example 1 was changed to one obtained by mixing 100 parts by mass of an acrylic adhesive ("DX2-PDP-9", tradename, manufactured by Nippon Shokubai Co., Ltd.), 0.5 part by mass of a curing agent ("Coronate L-55", tradename, manufactured by Nippon Polyurethane Industry Co., Ltd.) and 33 parts by mass of methyl ethyl ketone and adjusting so that the solid content would be 30 mass%.

EXAMPLE 9

An optical film was obtained in the same manner as in Example 2 except that the base solution used in Example 2 was changed to the base solution used in Example 8.

EXAMPLE 10

An optical film was obtained in the same manner as in Example 3 except that the base solution used in Example 3 was changed to the base solution used in Example 8.

EXAMPLE 11

An optical film was obtained in the same manner as in Example 4 except that the base solution used in Example 4 was changed to the base solution used in Example 8.

EXAMPLE 12

An optical film was obtained in the same manner as in Example 5 except that the base solution used in Example 5 was changed to the base solution used in Example 8.

TEST EXAMPLE 1

The optical properties (luminous average transmittance, chromaticity, near infrared transmittance) and durability (heat resistance, light resistance) of the optical films obtained in Examples 1 to 12 were evaluated by the following methods. The results are shown in Table 1.

Optical properties

Using a spectrophotometer (UV-3100, manufactured by Shimadzu Corporation), the spectrum of a test specimen of 20x20 mm cut out from each sample was measured within a range of from 380 to 1,300 nm.
In accordance with JIS Z8701-1999, the weighted average transmittance (the luminous average transmittance Tv) within the visible region (380 to 780 nm), and the chromaticity coordinates (x, y) were calculated.
Further, the near infrared transmittances at the respective wavelengths in the near infrared region (850 nm, 900 nm, 950 nm and 1,000 nm) were represented by T850, T900, T950 and T1000, respectively.

Heat resistance

Using a constant temperature container (manufactured by Tokyo Rikakikai Co., Ltd.), a test was carried out at a temperature of 80°C for 1,000 hours, and the respective values of Tv, x and y of each sample were compared with the measured values before the test. A case where the change before and after the test was all less than 3% was identified by ○, a case where any one was at least 3% and less than 5% was identified by Δ, and a case where any one was at least 5% was identified by ×.

Table 1

| | Optical properties | | | | | | | Heat resistance |
|---|---|---|---|---|---|---|---|---|
| | Luminous average transmittance (%) | Chromaticity | | Near infrared transmittance (%) | | | | |
| | Tv | x | y | T850 | T900 | T950 | T1000 | |
| Ex. 1 | 71.5 | 0.314 | 0.322 | 11.0 | 5.9 | 4.2 | 3.7 | ○ |
| Ex. 2 | 70.3 | 0.314 | 0.321 | 9.5 | 5.1 | 3.7 | 3.4 | ○ |
| Ex. 3 | 67.9 | 0.315 | 0.323 | 8.7 | 5.4 | 4.6 | 5.0 | ○ |
| Ex. 4 | 68.2 | 0.317 | 0.325 | 1.3 | 0.7 | 0.6 | 0.9 | ○ |
| Ex. 5 | 69.0 | 0.314 | 0.321 | 0.4 | 0.2 | 1.1 | 3.3 | △ |
| Ex. 6 | 71.1 | 0.314 | 0.321 | 10.1 | 6.2 | 3.9 | 3.6 | ○ |
| Ex. 7 | 73.0 | 0.315 | 0.323 | 12.0 | 6.2 | 4.5 | 4.2 | ○ |
| | | | | | | | | |
| Ex. 8 | 84.1 | 0.315 | 0.325 | 26.3 | 11.7 | 7.6 | 7.4 | × |
| Ex. 9 | 84.1 | 0.315 | 0.323 | 28.5 | 11.3 | 5.8 | 5.5 | × |
| Ex. 10 | 85.2 | 0.314 | 0.323 | 21.5 | 14.1 | 7.7 | 7.3 | × |
| Ex. 11 | 85.6 | 0.317 | 0.329 | 36.6 | 17.5 | 10.3 | 9.9 | × |
| Ex. 12 | 85.9 | 0.318 | 0.330 | 36.0 | 16.9 | 9.8 | 9.6 | × |

As shown in Table 1, each of the optical films of Examples 1 to 7 (Examples of the present invention) showed a low near infrared transmittance and had good optical properties. When more specifically observed, the near infrared transmittances of the optical films of Examples 1 to 5 wherein diimonium dyes having 2, 4, 5, 6 and 8 carbon atoms in their side chains, were used, were found decreased in proportion to the carbon number of the side chain, particularly remarkably in the vicinity of 850 nm, and especially, the optical films of Examples 2 to 5 wherein the carbon number of the side chain was within a range of from 2 to 8, showed a near infrared transmittance of at most 10% at all of the four wavelengths. Further, with respect to the heat resistance of the optical films of Examples 1 to 7, the optical film of Example 5 wherein a diimonium dye having 8 carbon atoms in the side chain was employed, was poor to some extent, but the rest were good. On appearance, the color of the optical film of Example 3 was the best.

Whereas, each of the optical films of Examples 8 to 12 wherein the diimonium dyes of Examples 1 to 5 were incorporated to acrylic adhesives, was poor in the heat resistance. Further, irrespective of the carbon number of the side chain, the near infrared transmittance, especially the near infrared transmittance in the vicinity of 850 nm, was high.

The entire disclosure of Japanese Patent Application No. 2003-292978 filed on August 13, 2003 including specification, claims and summary is incorporated herein by reference in its entirety.

**Claims**

1. A near infrared absorptive adhesive composition comprising a near infrared absorptive dye having the maximum absorption wavelength within a range of from 800 to 1100 nm, and a silicone adhesive.

2. The near infrared absorptive adhesive composition according to Claim 1, wherein the silicone adhesive is an addition-reaction type silicone adhesive.

3. The near infrared absorptive adhesive composition according to Claim 1 or 2, wherein the near infrared absorptive dye contains a diimonium dye of the following formula (I):

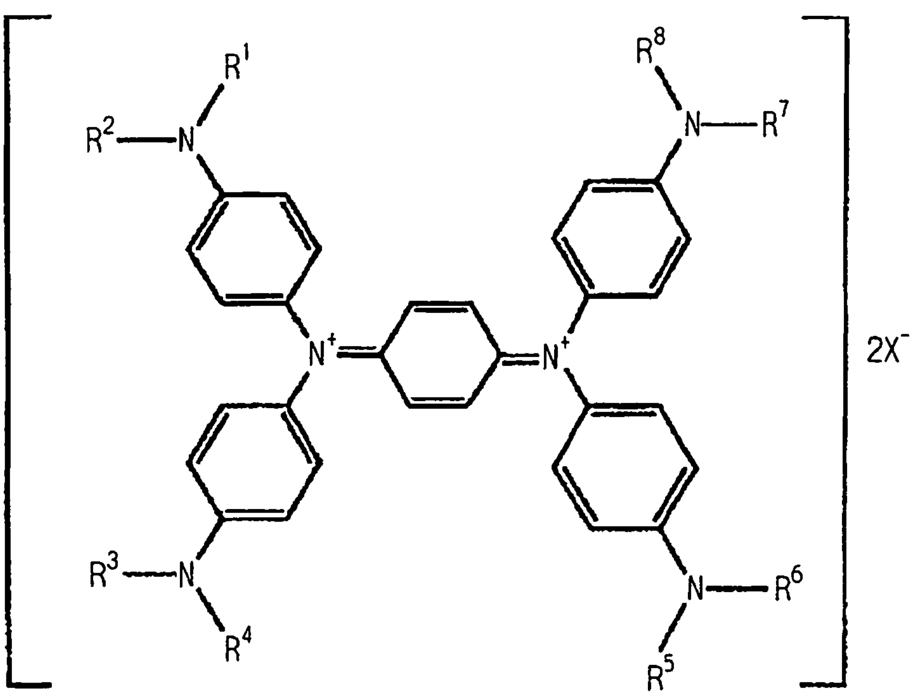

(I)

wherein each of $R^1$ to $R^8$ which are independent of one another, is a hydrogen atom, an alkyl group which may be substituted, an alkenyl group which may be substituted, an aralkyl group which may be substituted, or an alkynyl group which may be substituted, and $X^-$ is an anion.

4. The near infrared absorptive adhesive composition according to Claim 3, wherein in the formula (I), each of $R^1$ to $R^8$ is a $C_{4-8}$ alkyl group.

5. An optical film having a near infrared absorption layer comprising the near infrared absorptive adhesive composition as claimed in any one of Claims 1 to 4.

European Patent Office

# EUROPEAN SEARCH REPORT

Application Number
EP 04 01 8967

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 090 910 A (NIPPON KAYAKU KK) 11 April 2001 (2001-04-11) * page 3, line 37 - line 55 * * page 10, line 44 - line 45 * ----- | 1-5 | C09J183/00 C08K5/19 |
| X | WO 03/005076 A (KITAYAMA YASUYUKI ; YAMAMURA SHIGEO (JP); NIPPON KAYAKU KK (JP)) 16 January 2003 (2003-01-16) * abstract * & EP 1 403 666 A (NIPPON KAYAKU KK) 31 March 2004 (2004-03-31) * page 10, line 44 - line 45 * * page 3, line 35 - line 55 * ----- | 1-5 | |
| X | PATENT ABSTRACTS OF JAPAN vol. 2000, no. 24, 11 May 2001 (2001-05-11) & JP 2001 207142 A (TOMOEGAWA PAPER CO LTD), 31 July 2001 (2001-07-31) * abstract * | 1-5 | |
| X | & DATABASE WPI Section Ch, Week 200227 Derwent Publications Ltd., London, GB; Class A14, AN 2002-209724 XP002298157 & JP 2001 207142 A (TOMOEGAWA SEISHISHO KK) 31 July 2001 (2001-07-31) * abstract * ----- | 1-5 | TECHNICAL FIELDS SEARCHED (Int.Cl.7) C09J C08K |

The present search report has been drawn up for all claims

| Place of search | Date of completion of the search | Examiner |
|---|---|---|
| Munich | 28 September 2004 | Vaccaro, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 04 01 8967

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2004

| Patent document cited in search report | Publication date | Patent family member(s) | Publication date |
|---|---|---|---|
| EP 1090910 A | 11-04-2001 | EP 1090910 A1 | 11-04-2001 |
| | | US 6475590 B1 | 05-11-2002 |
| | | CN 1306507 T | 01-08-2001 |
| | | WO 9967200 A1 | 29-12-1999 |
| | | JP 2000080071 A | 21-03-2000 |
| | | JP 2000081511 A | 21-03-2000 |
| | | JP 2000229931 A | 22-08-2000 |
| WO 03005076 A | 16-01-2003 | EP 1403666 A1 | 31-03-2004 |
| | | WO 03005076 A1 | 16-01-2003 |
| | | JP 2003096040 A | 03-04-2003 |
| | | US 2004137367 A1 | 15-07-2004 |
| | | JP 2003205681 A | 22-07-2003 |
| EP 1403666 A | 31-03-2004 | EP 1403666 A1 | 31-03-2004 |
| | | US 2004137367 A1 | 15-07-2004 |
| | | WO 03005076 A1 | 16-01-2003 |
| | | JP 2003096040 A | 03-04-2003 |
| | | JP 2003205681 A | 22-07-2003 |
| JP 2001207142 A | 31-07-2001 | NONE | |

EPO FORM P0459

For more details about this annex : see Official Journal of the European Patent Office, No. 12/82